**Europäisches Patentamt**

**European Patent Office**

**Office européen des brevets**

(19)

(11) Numéro de publication: **0 122 162**
A1

# DEMANDE DE BREVET EUROPEEN

(21) Numéro de dépôt: **84400302.0**

(22) Date de dépôt: **15.02.84**

(51) Int. Cl.³: **B 64 C 25/42**

(30) Priorité: **08.03.83 FR 8303750**

(43) Date de publication de la demande: **17.10.84**
**Bulletin 84/42**

(84) Etats contractants désignés: **DE GB IT SE**

(71) Demandeur: **MESSIER-HISPANO-BUGATTI (S.A), 5, rue Louis Lejeune, F-92120 Montrouge (FR)**

(72) Inventeur: **Guichard, Jean, 15, rue Louis Blanc, F-92250 La Garenne Colombes (FR)**

(74) Mandataire: **Flavenot, Bernard, Société S.E.D.I.C. 40 rue Victor Basch, F-92120 Montrouge (FR)**

(54) **Procédé et dispositif de commande du freinage d'un aéronef lors de l'atterrissage dès qu'il a pris contact avec le sol d'une piste par ses trains d'atterrissage principaux et quand le train avant n'a pas encore pris contact avec le sol.**

(57) La présente invention concerne un procédé et dispositif de commande de freinage.

Le procédé pour commander le freinage d'un aéronef (1) lors de son atterrisage sur une piste (3) dès qu'il a pris contact avec le sol (2) par les moyens de roulement (6) des atterrisseurs principaux (7) et antérieurement avant que le moyen de roulement (8) de l'atterrisseur avant (9) n'ait lui-même pris contact avec le sol consiste à:

— déterminer la valeur de l'angle de cabré △ de l'aéronef dès qu'il prend contact avec la piste (2) par des moyens de roulement (6) des atterrisseurs principaux (7),

— élaborer un signal représentatif de la valeur de l'angle de cabré,

— commander le freinage par tous moyens dudit aéronef en fonction d'une valeur représentative du signal pour obtenir de ce fait une variation de l'angle de cabré acceptable.

Application au frainage des aéronefs.

EP 0 122 162 A1

## PROCEDE ET DISPOSITIF DE COMMANDE DU FREINAGE D'UN AERONEF LORS DE L'ATTERRISSAGE DES QU'ILS A PRIS CONTACT AVEC LE SOL D'UNE PISTE PAR SES TRAINS D'ATTERRISSAGE PRINCIPAUX ET QUAND LE TRAIN AVANT N'A PAS ENCORE PRIS CONTACT AVEC LE SOL

La présente invention concerne les procédés et les dispositifs pour permettre la commande du freinage d'un aéronef lors d'un atterrissage dès que cet aéronef a pris contact avec ses trains d'atterrissage principaux avec le sol d'une piste et antérieurement avant que l'atterrisseur avant n'ait lui-même pris contact avec ce sol.

On sait que lorsqu'un aéronef, et plus particulièrement un aéronef roulant à grande vitesse comme par exemple un avion de chasse ou de combat, atterrit sur une piste dans une position très cabrée, il prend contact avec le sol de la piste par les roues de ses trains principaux, avant que la roue du train secondaire à l'avant ne prenne elle-même contact avec cette piste.

Ceci fait que l'aéronef roule sur une certaine longueur de piste non négligeable dans cette position cabrée.

Selon l'art antérieur, à de très rares exeptions, ce n'est que lorsque l'ensemble des trois moyens de roulement des atterrisseurs a pris contact avec le sol que le pilote peut alors commander par tous moyens le freinage de l'aéronef en vue de l'immobiliser dans un temps très ccurt et sur une distance la plus réduite possible.

En effet, dans ce domaine de l'aéronautique, mais non exclusivement, il est nécessaire de perdre un minimum de temps en maintenant ces aéronefs sur une piste pour différentes raisons, notamment pour des raisons de sécurité et aussi pour pouvoir libérer le plus rapidement possible la piste et la laisser libre pour les autres avions et leur permettre d'atterrir à leur tour, mais aussi, et peut être le plus couramment, utiliser des portions de piste très courtes.

En analysant les procédés d'atterrissage selon l'art antérieur, tels qu'ils viennent d'être décrits ci-dessus, on constate que le freinage n'est généralement commandé que lorsque les trois moyens de · roulement, respectivement des deux atterrisseurs principaux et de l'atterrisseur avant, ont pris contact avec le sol. Une grande portion de piste pouvant atteindre quelques centaines de mètres n'est alors pas utilisée pour le freinage de l'aéronef, ce qui nécessite de ce fait des pistes relativement longues.

La présente invention a pour but de mettre en oeuvre un procédé pour permettre d'arrêter un aéronef lors de son atterrissage le plus rapidement possible et sur une portion de piste courte en commandant sélectivement le freinage dès qu'il prend contact avec le sol de la piste.

La présente invention a aussi pour but de réaliser un dispositif pour mettre en oeuvre le procédé selon l'invention.

Plus précisément la présente invention a pour objet un procédé pour permettre de commander le freinage d'un aéronef lors de son atterrissage sur une piste dès qu'il a pris contact avec le sol par les moyens de roulement des atterrisseurs principaux et antérieurement avant que le moyen de roulement de l'atterrisseur avant, n'ait lui-même pris contact avec le sol, caractérisé par le fait qu'il consiste à :

- déterminer la valeur de l'angle de cabré dudit aéronef dès qu'il prend contact avec la piste par ses moyens de roulement des atterrisseurs principaux,

- élaborer un signal représentatif de la valeur dudit angle de cabré,

- commander le freinage par tous moyens dudit aéronef, en fonction d'une valeur représentative dudit signal pour obtenir de ce fait une variation de l'angle de cabré acceptable.

La présente invention a aussi pour objet un dispositif pour permettre de commander le freinage d'un aéronef lors de son atterrissage sur une piste dès qu'il a pris contact avec le sol par les moyens de roulement des atterrisseurs principaux et antérieurement avant que le moyen de roulement du train avant n'ait lui-même pris contact avec le sol, caractérisé par le fait qu'il comprend,

- des moyens pour déterminer la valeur de l'angle de cabré dudit aéronef dès qu'il prend contact avec la piste par ses moyens de roulement des atterrisseurs principaux,

- des moyens pour élaborer un signal représentatif de la valeur de la variation dudit angle de cabré,

- des moyens pour commander le freinage dudit aéronef en fonction d'une valeur représentctive dudit signal pour obtenir de ce fait une variation de l'angle de cabré acceptable.

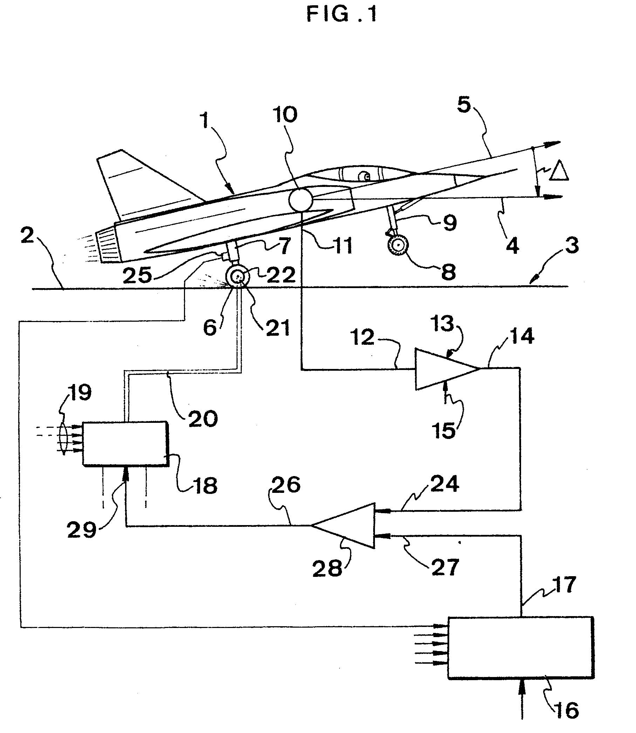

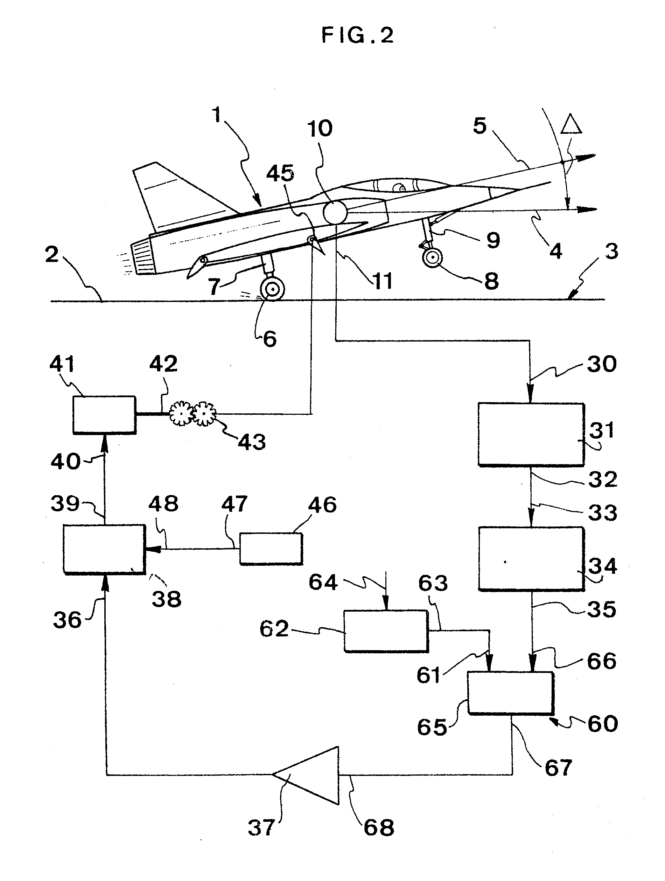

D'autres caractéristiques et avantages de la présente invention apparaîtront au cours de la description suivante donnée en regard des dessins annexés à titre illustratif, mais nullement limitatif, dans lesquels les figures 1 et 2 représentent, sous forme schématique, deux modes de réalisation d'un dispositif permettant de mettre en oeuvre le procédé selon l'invention.

Le procédé permettant le commander le freinage d'un aéronef 1 lors de son atterrissage dès qu'il prend contact avec par exemple le sol 2 d'une piste 3 consiste à déterminer l'angle $\Delta$ de cabré de l'aéronef 1 par exemple par rapport au plan de la piste 3. Cet angle $\Delta$ est en fait l'angle que font entre elles respectivement une direction 4 parallèle au plan de la piste 3 et la direction de propagation 5 de l'aéronef 1. Cet angle $\Delta$ peut être déterminé par tous moyens et notamment par ceux qui seront explicités ci-après. On élabore ensuite un signal d'une valeur représentative de cet angle $\Delta$ à partir du moment où l'aéronef 1 prend contact avec le sol 2 par les roues 6 des atterrisseurs principaux 7 et cela antérieurement avant que ne prenne contact elle-même avec le sol 2, la roue 8 de l'atterrisseur avant 9.

Cette mesure de l'angle de cabré $\Delta$ se fait de façon continue et le signal ainsi élaboré peut représenter les variations de la valeur de cet angle de cabré $\Delta$ .

D'une façon générale, le signal représentatif de la variation de l'angle de cabré est utilisé pour commander le freinage de l'aéronef dès le moment où il a pris contact avec le sol afin de commencer à commander son arrêt dans les plus brefs délais. Cependant, ce freinage se fait d'une façon sélective afin que l'arrêt ne soit pas trop brutal et surtout que cela n'entraîne pas une abattée trop rapide de l'aéronef en plaquant brutalement la roue 8 de l'atterrisseur avant 9 au contact du sol 2.

En effet si cette abattée de l'aéronef se faisait beaucoup trop rapidement, il y aurait alors un risque de cassure de l'atterrisseur avant.

Dans ces conditions, il est nécessaire de commander un freinage notamment des roues 6 de façon progressive dès l'instant où celles-ci ont pris contact avec le sol dans des proportions qui fassent que la variation de l'angle de cabré $\Delta$ ne soit pas supérieure à une certaine valeur prédéterminée pour éviter les incidents mentionnés ci-dessus.

On constate donc qu'un mode de mise en oeuvre d'un procédé, comme décrit ci-dessus, il est alors possible de commencer à commander le freinage de l'aéronef dès que les roues principales ont touché le sol. Une telle commande permet ainsi de gagner sur les distances d'arrêt lors des atterrissages. On peut aussi accessoirement économiser du carburant et libérer plus rapidement la piste ou portion de piste pour les autres aéronefs et, obtenir de ce fait, une rotation plus rapide de l'ensemble d'une flotte par exemple d'avions de chasse.

Les figures 1 et 2 représentent, sous forme schématique, deux modes possibles de réalisation de dispositifs permettant de mettre en oeuvre le procédé décrit ci-dessus, selon la figure 1 dans le cas d'un moyen de freinage par freins à disques selon la figure 2 par un moyen de freinage du type aérofreins.

Il est tout d'abord précisé que sur les figures 1 et 2, les mêmes moyens sont désignés par les mêmes références.

En revenant plus particulièrement à la figure 1, celle-ci représente un dispositif constitué d'un ensemble de moyens qui seront embarqués dans l'aéronef pour permettre de mettre en oeuvre le procédé décrit ci-dessus.

Ce dispositif comporte un générateur 10 permettant de délivrer à sa sortie 11 un signal représentatif de la valeur de l'angle $\Delta$ que font entre elles la direction de propagation de l'aéronef quand celui-ci roule sur le sol, c'est-à-dire en fait une direction parallèle à un plan passant sensiblement par les trois points d'appui des atterrisseurs, et une direction 4 parallèle au plan de la piste 3 qui, généralement, peut être considérée comme horizontale.

Ce générateur 10 peut être constitué par exemple par une centrale à inertie, comme un gyroscope mécanique ou à laser, qui sont bien connus en eux-mêmes et que l'on trouve couramment dans le domaine aéronautique.

Cette sortie 11 est connectée à l'entrée 12 par exemple d'un amplificateur, éventuellement multiplicateur, par un coefficient donné, pour délivrer un signal corrigé en sortie 14. La modification du coefficient multiplicateur peut être commandée par l'application d'un signal prédéterminé à l'entrée de commande 15 de l'amplificateur 13.

Ce dispositif comporte en plus un générateur 16 permettant de délivrer à sa sortie 17 un signal dit de commande de freinage, appliqué à un moyen de contrôle d'un fluide sous pression 18 comme par exemple une servovalve à l'entrée 19 de laquelle

est appliqué un fluide sous pression qui peut être amené par des conduits 20 vers le moyen de commande 21 des freins à disques 22 qui équipent généralement les moyens de roulement des atterrisseurs principaux 7.

Dans l'application au procédé décrit ci-dessus, la sortie 17 du générateur 16 est reliée à l'entrée de commande 29 de la servovalve 18 à travers par exemple un amplificateur différentiel 28 entre son entrée 27 et sa sortie 26.

D'une façon classique, le générateur 16 permet de délivrer à sa sortie 17 un signal représentatif d'un ensemble de paramètres prédéterminés, comme par exemple la vitesse vraie de l'aéronef, la vitesse des roues freinées etc...

Un tel dispositif de freinage et de commande de freinage comprenant le générateur 16, la servovalve 18, le conduit 20, les moyens de commande 21 et les freins à disques 22 ne seront pas décrits plus amplement, car ils sont connus en eux-mêmes et notamment la demanderesse commercialise depuis longtemps ces moyens. Selon le dispositif, la sortie 14 est reliée à une deuxième entrée 24 de l'amplificateur différentiel 28.

Le dispositif décrit ci-dessus fonctionne de la façon suivante :

- dès que l'aéronef 1 prend contact avec le sol 2 par ses moyens de roulement 6, le générateur de commande 16 est enclenché pour commander le freinage de l'aéronef par application du fluide sous pression dans les pistons de commande 21 des freins à disques 22.

Ces moyens pour déterminer l'instant d'atterrissage, peuvent être constitués soit par des contacteurs 25 mesurant l'enfoncement des trains principaux et délivrant un signal de commande appliqué au générateur 16, ou soit des moyens pour mesurer la vitesse de rotation des roues.

Dans le domaine aéronautique le freinage s'effectue de façon à commander constamment l'application de la pression du fluide sur les freins à disques, mais par contre, on élabore des signaux pour atténuer la pression et entraîner de ce fait une commande de défreinage quand cela est nécessaire.

Dans ces conditions lorsque l'aéronef a une position cabrée comme celle qui est illustrée sur la figure 1, la centrale 10 délivre à sa sortie 11 un signal ayant une valeur d'amplitude importante puisque la valeur de l'angle $\Delta$ est maximale. Ce signal délivré à sa sortie 11 (éventuellement modifié par multiplication par un coefficient prédéterminé par étalonnage) est comparé dans l'amplificateur 16 qui est appliqué à l'entrée 17. De ce fait, le signal à la sortie 26 a une valeur qui commande une intensité de freinage telle que l'angle de cabré et sa vitesse de variation soient acceptables.

D'une façon générale il est quand même, relativement difficile de donner un exemple concret du processus de mise en oeuvre du freinage d'un aéronef car cela dépend notamment de leur configuration géométrique.

Cependant par des études expérimentales, le programme de freinage pourra être facilement élaboré par l'homme de l'art. Malgré tout ce processus doit tenir compte du fait que tant que la valeur de l'angle de cabré est important, il est possible de freiner de façon importante puisque l'aéronef peut être dans cette position assez longtemps par la portée dûe à sa vitesse. Ce qu'il est nécessaire d'obtenir c'est que la vitesse, en l'occurrence la variation de l'angle de cabré $\Delta$ ne soit pas excessive et ne dépasse pas une certaine valeur. Il est donc nécessaire de définir la valeur optimale de l'angle $\Delta$ de cabré en fonction de la structure et vitesse de l'aéronef qui permettent le freinage optimum tout en limitant la variation de cet angle $\Delta$ , étant noté que cette variation de l'angle $\Delta$ est aussi fonction de

la valeur de l'angle $\Delta$. Le programme de commande de freinage doit donc tenir compte des variations de $\Delta$ et de sa valeur absolue.

Il apparaît ici l'aspect avantageur du dispositif qui permet de commencer le freinage de l'aéronef très tôt, dès qu'il prend contact avec le sol ce que ne font pas les dispositifs de l'art antérieur.

Le dispositif qui vient d'être décrit ci-dessus permet d'obtenir un atterrissage dans de très bonnes conditions en commandant le freinage par les freins à disque dès que l'aéronef prend contact avec le sol.

Cependant il peut être quelquefois avantageux pour augmenter encore les capacités de ralentissement d'utiliser d'autres moyens de freinage comme par exemple des aérofreins.

La figure 2 représente un mode de réalisation d'un tel dispositif. La centrale 10 à sa sortie 11 connectée à l'entrée 30 d'un dispositif de mise en forme 31 permettant de délivrer à sa sortie 32 un signal par exemple électrique dont l'amplitude est représentative de la valeur de l'angle $\Delta$ tel que défini ci-dessus. Cette sortie 32 est connectée à une entrée 33 d'un circuit 34 permettant de délivrer à sa sortie 35 un signal dérivé de celui appliqué à son entrée 33. La sortie 35 est appliquée à l'entrée 36, avantageusement à travers un dispositif à seuil 60 et un amplificateur 37, d'un comparateur 38 dont la sortie 39 est reliée à l'entrée de commande 40 d'un ensemble moteur 41. Cet ensemble moteur 41 est connecté mécaniquement par exemple par un arbre 42 et engrenages 43 au volet d'aérofrein 45.

Le détecteur de seuil 60 est constitué plus particulièrement, par exemple, par un générateur 62, délivrant à sa sortie 63, un signal avantageusement réglable par l'entrée de commande 64.

Le détecteur 60 comporte en outre une porte 65 dont les deux entrée 66 et 61 sont respectivement connectées à la sortie 35 de l'organe dérivateur 34 et à la sortie 63 du générateur 62.

La sortie 67 de cette porte logique du type détecteur du seuil est connectée à l'entrée 68 de l'amplificateur 37.

La porte logique 65 est, du type, qui permet de laisser passer un signal appliqué à son entrée 66 tant que celui-ci est inférieur en amplitude, à la valeur de l'amplitude du signal qui est appliqué à son autre entrée 61. Par contre, dans le cas où le signal appliqué à l'entrée 66 a une amplitude supérieure à celle qui est appliquée à l'entrée 61, il délivre à sa sortie 67 un signal ayant une amplitude du niveau du seuil, c'est-à-dire du signal appliqué à l'entrée 61. Avantageusement le dispositif comporte un capteur 46 de position du volet d'aéronef 45 dont la sortie 47 est reliée à la deuxième entrée 48 du comparateur 38.

La mise en oeuvre des moyens d'orientation du volet d'aérofrein 45 par un moteur 41 ne présente pas de difficultés mécaniques étant donné qu'ils sont souvent utilisés dans le domaine aéronautique, notamment pour la commande du pilotage des aéronefs.

Le dispositif tel qu'illustré sur la figure 2 fonctionne de la façon suivante :

- signal délivré à la sortie 11 donné par la centrale à inertie 10, est appliqué à l'entrée 30 d'un circuit de mise en forme 31. Le signal apparaissant alors à la sortie 32, représente la valeur de l'angle de cabré de l'aéronef 1. De ce fait, ce signal représente constamment la valeur de cet angle $\Delta$ appliqué à l'organe dérivateur 34 qui permet de délivrer à la sortie 35 un signal qui représente en amplitude la valeur avec variation de l'angle $\Delta$. Comme mentionné précédemment, il est nécessaire que l'angle $\Delta$ varie constamment, mais suivant une valeur de variation qui soit toujours en deçà d'une valeur qui puisse être acceptable pour l'aéronef, c'est-à-dire pas trop rapidement pour éviter que la roue avant 8 du train ne prenne contact avec le sol trop brutalement.

L'expérience déterminera la valeur de cette variation. Le signal appliqué à la porte logique 65 la traverse que si sa valeur est inférieure au seuil déterminé et représenté par la valeur du signal appliqué à l'entrée 61. Le signal délivré alors à la sortie 67 de la porte logique est appliqué suivant un coefficient d'amplification prédéterminé, à travers le comparateur 38 et le moteur 41 pour faire varier la position angulaire des volets de l'aérofrein 36 au moyen des engrenages 43.

Quand l'aérofrein a pris la position voulue en corrélation avec la valeur du signal appliqué à l'entrée 36, le capteur 46 délivre un signal représentatif de la position de ce volet qui annule de ce fait le signal de commande du moteur.

Ainsi, par asservissement, la position de l'aérofrein va varier en fonction de la variation de l'angle de cabré $\Delta$ limité par un sécurité grâce au détecteur de seuil 65.

Le dispositif décrit ci-dessus présente donc le même avantage que celui selon la figure 1, car il permet de commencer le freinage de l'aéronef dès que celui-ci prend contact avec le sol par ses trains principaux avant même qu'il ne touche lui-même le sol.

Ci-dessus il a été donné deux moyens permettant de commander le freinage d'un aéronef, dans les conditions précisées, en utilisant, soit un freinage sur les roues au moyens de freins à diques, soit en utilisant les aérofreins.

On peut aussi concevoir une juxtaposition de ces moyens de freinage dont les commandes sont effectuées à partir de la même centrale d'inertie et avec un même élément électronique de traitement qui pourra commander sélectivement ces deux moyens, en combinaison, afin que comme il est mentionné ci-dessus, le freinage soit optimal avec une variation de l'angle d'abattée déterminée minimale.

## R E V E N D I C A T I O N S

1) Procédé pour commander le freinage d'un aéronef lors de son atterrissage sur une piste dès qu'il a pris contact avec le sol par les moyens de roulement des atterrisseurs principaux et antérieurement avant que le moyen de roulement de l'atterrisseur avant n'ait lui-même pris contact avec le sol, caractérisé par le fait qu'il consiste à :

- déterminer la valeur de l'angle de cabré $\Delta$ dudit aéronef dès qu'il prend contact avec la piste par les moyens de roulement des atterrisseurs principaux,

- élaborer un signal représentatif de la valeur dudit angle de cabré,

- commander le freinage par tous moyens dudit aéronef en fonction d'une valeur représentative dudit signal pour obtenir de ce fait une variation de l'angle de cabré acceptable.

2) Dispositif pour permettre de commander le freinage d'un aéronef (1) lors de son atterrissage sur une piste (3) dès qu'il a pris contact avec le sol par les moyens de roulement (6) des atterrisseurs principaux (7) et antérieurement avant que le moyen de roulement (8) du train avant (9) n'ait lui-même pris contact avec le sol, caractérisé par le fait qu'il comprend,

- des moyens (10) pour déterminer la valeur de l'angle de cabré dudit aéronef (1) dès qu'il prend contact avec la piste par ces moyens de roulement des atterrisseurs principaux,

- des moyens (13-31-34...) pour élaborer un signal représentatif de la valeur de la variation dudit angle de cabré $\Delta$ ,

- des moyens pour commander (16-18-18-22-37-38-41-43-45...) le freinage dudit aéronef en fonction d'une valeur représentative dudit signal pour obtenir de ce fait une variation de l'angle de cabré acceptable.

3) Dispositif selon la revendication 1, caractérisé par le fait que lesdits moyens pour déterminer la valeur de l'angle de cabré dudit aéronef sont constitués par une centrale à inertie du type mécanique ou à laser.

4) Dispositif selon l'une des revendications 1 et 2, caractérisé par le fait que lesdits moyens pour commander le freinage dudit aéronef en fonction d'une valeur représentative dudit signal comportent au moins l'un des éléments pris dans la liste suivante, freins à disques (22), et ou aérofreins (45).

FIG.1

FIG.2

U122162

**Office européen des brevets**

**RAPPORT DE RECHERCHE EUROPEENNE**

EP 84 40 0302

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 260 494 (SHIBER) <br> * Page 4, lignes 3-24; page 6, lignes 29-37; figure 1 * | 1 | B 64 C 25/42 |
| A | FR-A-2 456 012 (GOODYEAR AEROSPACE CORP.) <br> * En entier * | 1 | |

|  |  | DOMAINES TECHNIQUES RECHERCHES (Int. Cl. 3) |
|---|---|---|
|  |  | B 64 C |

Le présent rapport de recherche a été établi pour toutes les revendications

| Lieu de la recherche | Date d'achèvement de la recherche | Examinateur |
|---|---|---|
| LA HAYE | 13-06-1984 | ZERI A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82